# EUROPEAN PATENT SPECIFICATION

(11) **EP 4 280 355 B1**
(45) Date of publication and mention of the grant of the patent: **15.07.2026**
(21) Application number: 21958923.1
(22) Date of filing: 30.09.2021
(51) Int. Cl.: H01M 50/202, H01M 50/22, H01M 50/107, H01M 50/119, H01M 50/148, H01M 50/152, H01M 50/209, H01M 50/342

(54) **BATTERY CELL, BATTERY, ELECTRICAL DEVICE, AND MANUFACTURING APPARATUS AND METHOD FOR BATTERY CELL**
BATTERIEZELLE, BATTERIE, ELEKTRISCHE VORRICHTUNG UND HERSTELLUNGSVORRICHTUNG UND VERFAHREN FÜR BATTERIEZELLE
ÉLÉMENT DE BATTERIE, BATTERIE, DISPOSITIF ÉLECTRIQUE, ET APPAREIL ET PROCÉDÉ DE FABRICATION POUR ÉLÉMENT DE BATTERIE

(43) Date of publication of application: 22.11.2023
(73) Proprietor: Contemporary Amperex Technology (Hong Kong) Limited, Central, Central And Western District (HK)
(72) Inventor: SUN, Dongsheng, Ningde, Fujian 352000 (CN); FANG, Kun, Ningde, Fujian 352000 (CN); GU, Hui, Ningde, Fujian 352000 (CN); CHI, Qingkui, Ningde, Fujian 352000 (CN)
(74) Representative: Gong, Jinping
(86) International application number: PCT/CN2021/122298
(87) International publication number: WO 2023/050351

(56) References cited:
- CN-U- 214 124 050
- JP-A- 2001 313 011
- JP-A- 2009 129 664
- JP-A- 2010 027 523
- JP-A- S5 682 566
- KR-A- 20200 007 273

## Description

### TECHNICAL FIELD

This application relates to the field of battery technologies, and specifically, to a battery cell, a battery, an electric device, and a manufacturing device and method of battery cell.

### BACKGROUND

Lithium-ion batteries as rechargeable batteries have advantages such as small size, high energy density, high power density, long cycle life, and long storage time.

A rechargeable battery includes a metal housing, an end cover assembly, and an electrode assembly. The end cover assembly covers the top of the metal housing and is insulatedly connected to the metal housing to provide an enclosed space for the electrode assembly and electrolyte. Generally, a positive tab and a negative tab of the electrode assembly are electrically connected to an electrode terminal on the end cover assembly and the metal housing respectively to implement electric energy input or output. However, the metal housing has great resistance, seriously affecting electric energy output or input of a battery cell.
JP 2009 129664 describes an alkaline battery with a positive electrode wherein a member formed by deep-drawing a nickel-plated steel sheet into a bottomed cylindrical shape, and a method for the production of the alkaline battery.
KR 2020 0007273 illustrates a secondary battery with a bottom surface of the cylindrical box made of copper.
JP S56 82566 describes the manufacturing of a battery with a container superimposed via positive cathode material having a perforated metal plate on the bottom surface of the container.

### SUMMARY

Embodiments of this application provide a battery cell, a battery, an electric device, and a manufacturing device and method of battery cell to improve electric energy output performance of a battery. The present invention is set out in the appended set of claims.

According to a first aspect, the embodiments of this application provide a battery cell, including a metal housing, an electrode assembly, and a conductive member, where the metal housing has an accommodating cavity; the electrode assembly is accommodated in the accommodating cavity, the electrode assembly includes a first tab, and the first tab is electrically connected to the metal housing; and the conductive member is disposed on an outer surface of the metal housing, and resistance of the conductive member is lower than that of the metal housing.

In the above technical solution, the conductive member having a lower resistance than the metal housing is disposed on the outer surface of the metal housing, and the first tab is electrically connected to the metal housing. In the charging and discharging process, current passes through the conductive member or passes through both the conductive member and the metal housing, in whichever cases, the resistance in the charging and discharging process of the battery cell is lower than that in the case of current passing through the metal housing only. This can reduce electric energy consumed by the battery cell itself in the electric energy output process and improve power performance during electric energy input to the battery cell.

In addition, the metal housing includes an end wall and a side wall, where the end wall is configured to be connected to the first tab; the side wall surrounds an edge of the end wall, and the side wall and the end wall jointly define the accommodating cavity; and the conductive member is connected to the end wall, and a first conductive part is formed on an end of the side wall farther away from the end wall, the first conductive part being configured to output electric energy of the battery cell. In addition, the accommodating cavity has an opening, and the battery cell further includes an end cover, where the end cover is disposed on one end of the metal housing, and the end cover is configured to close the opening; and the metal housing further includes a restraint member, where the restraint member is located on the end of the side wall farther away from the end wall, the restraint member is configured to restrict the movement of the end cover along a direction leaving the electrode assembly, and at least part of the first conductive part is located on a side of the restraint member facing away from the electrode assembly. The battery cell further includes a first insulator, where the first insulator is configured to separate the first conductive part from the restraint member.

In the above technical solution, the conductive member on the outer surface of the metal housing extends from one end of the metal housing to the other end, and resistance of the conductive member is lower than that of the metal housing. In the charging and discharging process, current passes through the conductive member or passes through both the conductive member and the metal housing, in whichever cases, the resistance in the charging and discharging process of the battery cell is lower than that in the case of current passing through the metal housing only. This can reduce electric energy consumed by the battery cell itself in the electric energy output process and improve power performance during electric energy input to the battery cell.

In the above technical solution, the restraint member can restrict the position of the end cover so that the battery cell has a more stable structure. In addition, an output part is disposed on a side of the restraint member facing away from the end wall to facilitate connection between the output part and its structural member (for example, a busbar, an electric device, or a charging power source), so as to output or input electric energy.

In the above technical solution, the first insulator separates the first conductive part from the restraint member to reduce the probability of current passing through the metal housing, so that current is output only through the conductive member as much as possible, thereby reducing electric energy consumed by the battery cell itself in the electric energy output process and improving power performance during electric energy input to the battery cell.

In some embodiments of the first aspect of this application, the conductive member includes a second conductive part, where the second conductive part is disposed on an outer surface of the side wall and is electrically connected to the first conductive part; and the battery cell further includes a second insulator, where the second insulator is configured to separate the second conductive part from the side wall.

In the above technical solution, the second insulator separates the second conductive part from the side wall to reduce the probability of current passing through the metal housing, so that current is output only through the conductive member as much as possible, thereby reducing electric energy consumed by the battery cell itself in the electric energy output process and improving power performance during electric energy input to the battery cell.

In some embodiments of the first aspect of this application, the battery cell further includes a pressure relief mechanism, where the pressure relief mechanism is disposed on the end wall, and the pressure relief mechanism is configured to be actuated when internal pressure or temperature of the battery cell reaches a threshold, so as to relieve the internal pressure of the battery cell; the conductive member includes a third conductive part connected to the end wall, where the third conductive part is electrically connected to the first conductive part; and the end wall is provided with a partition, where the partition is configured to separate the third conductive part from the pressure relief mechanism.

In the above technical solution, the partition separates the third conductive part from the pressure relief mechanism so that the partition can reduce the probability of a joint position of the end wall and the conductive member coming into contact with electrolyte, thereby reducing the risk of electrolyte leakage from the metal housing caused by electrochemical corrosion generated when the joint position of the end wall and the conductive member reacts with the electrolyte.

In some embodiments of the first aspect of this application, the conductive member includes a fusing part, where one end of the fusing part is connected to the first conductive part, and the other end is connected to the third conductive part; and both the first conductive part and the third conductive part have a current flowing area larger than that of the fusing part.

In the above technical solution, the conductive member is provided with the fusing part. When current passing through the conductive member is beyond a current flow capacity of the fusing part, the fusing part is fused to cut off a circuit, reducing the probability of electrical safety accidents.

In some embodiments of the first aspect of this application, the metal housing is configured to output electric energy of the battery cell.

In the above technical solution, the conductive member is disposed on the outer surface of the metal housing. Electric energy of the battery cell is output through the metal housing, so that the metal housing and the conductive member are equivalent to two circuits in parallel, and resistance of the circuits in parallel is lower than that of any one of the circuits. Therefore, in the charging and discharging process, resistance of the battery cell itself is lower than resistance of the metal housing or the conductive member, thereby reducing electric energy consumed by the battery cell itself in the electric energy output process and improving power performance during electric energy input to the battery cell.

.

In the above technical solution, at least part of the conductive member is accommodated in the mounting groove on the outer surface of the metal housing, which can reduce an external size of the battery cell, avoiding that the external size of the battery cell is increased too much due to provision of the conductive member on the battery cell.

In some embodiments of the first aspect of this application, an outer surface of the part of the conductive member accommodated in the mounting groove is flush with the outer surface of the metal housing.

In the above technical solution, the outer surface of the part of the conductive member accommodated in the mounting groove is flush with the outer surface of the metal housing, that is, at least part of the conductive member accommodated in the mounting groove is completely accommodated in the mounting groove. This can reduce the external size of the battery cell, avoiding that the external size of the battery cell is increased too much due to provision of the conductive member on the battery cell.

According to a second aspect, the embodiments of this application provide a battery, including a busbar and the battery cell according to the embodiments in the first aspect, where busbar is configured to be connected to the metal housing or the conductive member.

**In** the above technical solution, the conductive member having a lower resistance than the metal housing is disposed on the outer surface of the metal housing, and the first tab is electrically connected to the metal housing. In the charging and discharging process, current passes through the conductive member or passes through both the conductive member and the metal housing, in whichever cases, the resistance in the charging and discharging process of the battery is lower than that in the case of current passing through the metal housing only. This can reduce electric energy consumed by the battery itself in the electric energy output process and improve power performance during electric energy input to the battery.

According to a third aspect, the embodiments of this application provide an electric device, including the battery cell according to the embodiments in the first aspect.

**In** the above technical solution, the resistance in the charging and discharging process of the battery cell is small, which can reduce electric energy consumed by the battery cell itself in the electric energy output process and improve power performance during electric energy input to the battery cell.

According to a non-claimed aspect, the embodiments of this application provide a manufacturing device of battery cell, including a providing apparatus and an assembly apparatus, where the providing apparatus is configured to provide a metal housing, an electrode assembly, and a conductive member, the metal housing has an accommodating cavity, the electrode assembly includes a first tab, and resistance of the conductive member is lower than that of the metal housing; and the assembly apparatus is configured to dispose the conductive member on an outer surface of the metal housing, accommodate the electrode assembly in the accommodating cavity, and electrically connect the first tab to the metal housing.

**In** the above technical solution, the conductive member having a lower resistance than the metal housing is disposed on the outer surface of the metal housing, and the first tab is electrically connected to the metal housing. In the charging and discharging process, current passes through the conductive member or passes through both the conductive member and the metal housing, in whichever cases, the resistance in the charging and discharging process of the battery is lower than that in the case of current passing through the metal housing only. This can reduce electric energy consumed by the battery itself in the electric energy output process and improve power performance during electric energy input to the battery.

According to a fourth aspect, some embodiments of this application provide a manufacturing method of battery cell, including: providing a metal housing, an electrode assembly, and a conductive member, where
the metal housing has an accommodating cavity, the electrode assembly includes a first tab, and resistance of the conductive member is lower than that of the metal housing;
disposing the conductive member on an outer surface of the metal housing;
accommodating the electrode assembly in the accommodating cavity; and
electrically connecting the first tab to the metal housing.

In the above technical solution, the conductive member having a lower resistance than the metal housing is disposed on the outer surface of the metal housing, and the first tab is electrically connected to the metal housing. In the charging and discharging process, current passes through the conductive member or passes through both the conductive member and the metal housing, in whichever cases, the resistance in the charging and discharging process of the battery is lower than that in the case of current passing through the metal housing only. This can reduce electric energy consumed by the battery itself in the electric energy output process and improve power performance during electric energy input to the battery.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below only show some embodiments of this application and thus should not be considered as limitations on the scope. A person of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic diagram of two battery cells connected by using a busbar according to some embodiments of this application;
FIG. 4 is an exploded view of a battery cell according to some embodiments of this application;
FIG. 5 is a partial cross-sectional view of a battery cell according to some embodiments of this application;
FIG. 6 is an enlarged view of position I in FIG. 5;
FIG. 7 is a cross-sectional view of a battery cell according to some other embodiments of this application;
FIG. 8 is an enlarged view of position II in FIG. 7;
FIG. 9 is an enlarged view of position III in FIG. 5;
FIG. 10 is a schematic structural diagram of a conductive member disposed on an outer wall of a metal housing according to some embodiments of this application;
FIG. 11 is a schematic structural diagram of a conductive member disposed on an outer wall of a metal housing according to some other embodiments of this application;
FIG. 12 is a schematic diagram illustrating that a battery cell is capable of outputting electric energy through a metal housing;
FIG. 13 is an axial cross-sectional view of a battery cell according to some embodiments of this application;
FIG. 14 is an enlarged view of a metal housing at position IV in FIG. 13;
FIG. 15 is an enlarged view of position IV in FIG. 13;
FIG. 16 is a schematic structural diagram of a manufacturing device of battery cell according to some embodiments of this application; and
FIG. 17 is a flowchart of a manufacturing method of battery cell according to some embodiments of this application.

Reference signs: 1000. vehicle; 100. battery; 10. box; 11. mounting space; 12. first part; 13. second part; 20. battery cell; 21. metal housing; 211. accommodating cavity; 212. opening; 213. end wall; 214. side wall; 215. restraint member; 216. mounting groove; 22. electrode assembly; 221. first tab; 222. second tab; 23. conductive member; 231. first conductive part; 232. second conductive part; 233. third conductive part; 234. fusing part; 235. through hole; 236. notch; 24. first adapter; 25. end cover; 251. electrode terminal; 26. second adapter; 27. insulative sealing member; 28. first insulator; 29. second insulator; 30. busbar; 40. pressure relief mechanism; 41. partition; 200. controller; 300. motor; A. first direction; 2000. manufacturing device of battery cell; 2100. providing apparatus; and 2200. assembly apparatus.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by a person of ordinary skill in the art based on the embodiments of this application without creative efforts shall fall within the protection scope of this application.

It should be noted that, without conflict, the embodiments and features in the embodiments in this application may be combined with each other.

It should be noted that similar reference signs and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

A battery cell includes a metal housing, an end cover, and an electrode assembly. The metal housing and the end cover provide an enclosed space for the electrode assembly and an electrolyte. To implement electric energy output of the battery cell, a positive tab and a negative tab of the electrode assembly are electrically connected to an electrode terminal on the end cover and the metal housing respectively to implement charging and discharging of the battery cell.

However, due to a great resistance, the metal housing as the electrode terminal causes overall internal resistance of the battery cell to increase, and especially when the battery cell is charged at a high current pulse, temperature of the metal housing rises rapidly, which greatly deteriorates power performance of the battery cell itself. In addition, at present, a main way to reduce the resistance of the metal housing is to increase thickness of the metal housing which in tum increases cross-sectional area of the metal housing. However, in a case that intemal space of the battery cell itself is nearly insufficient, further increasing the thickness of the metal housing will greatly reduce energy density of the battery cell.

Based on this, the embodiments of this application provide a battery cell, and a conductive member having a lower resistance than the metal housing is disposed on an outer surface of the metal housing. In the charging and discharging process of the battery cell, current may pass through the conductive member only or pass through both the conductive member and the metal housing, in whichever cases, the resistance in the charging and discharging process is lower than that in the case of current passing through the metal housing only. This can reduce electric energy consumed by the battery cell itself in the electric energy output process, improve power performance during electric energy input to the battery cell, and also ensure the strength and toughness of the metal housing itself.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

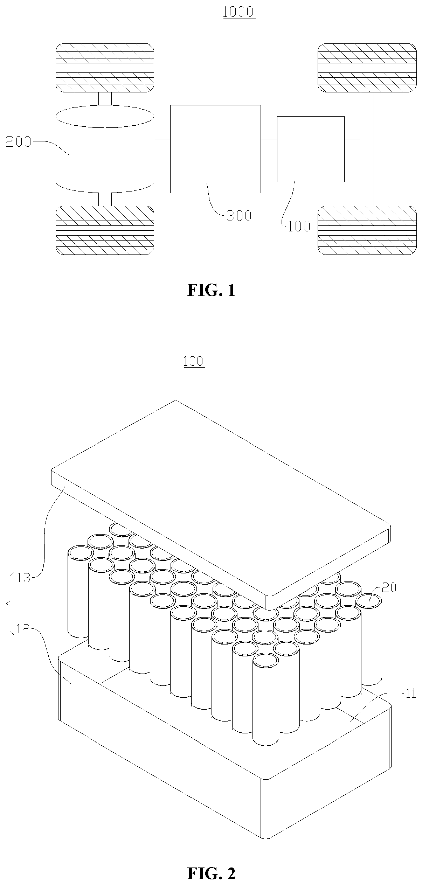

Referring to FIG. 1, FIG. 1 is a schematic structural diagram of a vehicle 1000 according to some embodiments of this application. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural diagram of a battery 100 according to some embodiments of this application. The battery 100 includes a box 10 and a battery cell 20, where the battery cell 20 is accommodated in the box 10.

The box 10 is configured to provide a mounting space 11 for the battery cell 20. In some embodiments, the box 10 may include a first part 12 and a second part 13. The first part 12 and the second part 13 fit together to jointly define the mounting space 11 for accommodating the battery cell 20. Certainly, a joint of the first part 12 and the second part 13 may be sealed by a sealing element (not shown in the figure), and the sealing element may be a sealing ring, a sealing adhesive, or the like.

The first part 12 and the second part 13 may have a variety of shapes, for example, cuboid or cylinder. The first part 12 may be a hollow structure with one side open, and the second part 13 may also be a hollow structure with one side open, where the open side of the second part 13 is engaged with the open side of the first part 12 so as to form the box 10 having an accommodating space. Certainly, alternatively, the first part 12 may be a hollow structure with one side open, and the second part 13 may be a plate structure, where the second part 13 covers the open side of the first part 12 so as to form the box 10 having a mounting space 11.

In the battery 100, one or more battery cells 20 may be provided. If a plurality of battery cells 20 are provided, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the plurality of battery cells 20 may be connected in series, parallel, or series-parallel first to form a battery module, and then a plurality of battery modules are connected in series, parallel, or series-parallel to form an entirety which is accommodated in the box 10. The battery cell 20 may be cylindrical, flat, cuboid, or of other shapes. For example, FIG. 2 shows the case of the battery cell 20 being cylindrical.

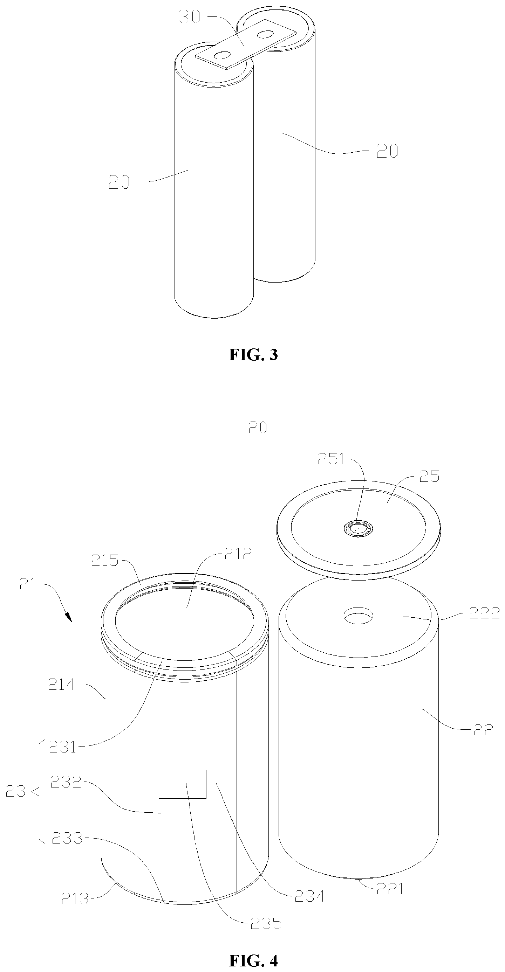

As shown in FIG. 3, in some embodiments, the battery 100 may further include a busbar 30, where electrical connection between the plurality of battery cells 20 may be implemented by the busbar 30 so as to implement series, parallel, or series-parallel connections of the plurality of battery cells 20.

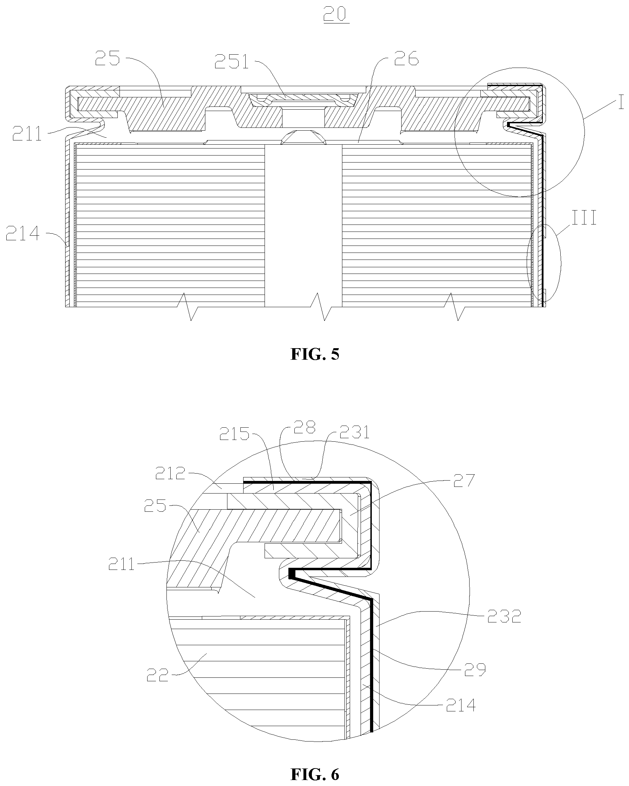

Referring to FIG. 4, FIG. 4 is an exploded view of a battery cell 20 according to some embodiments of this application. The battery cell 20 includes a metal housing 21, an electrode assembly 22, and a conductive member 23. The metal housing 21 has an accommodating cavity 211 (shown in FIG. 5). The electrode assembly 22 is accommodated in the accommodating cavity 211, the electrode assembly 22 includes a first tab 221, and the first tab 221 is electrically connected to the metal housing 21. The conductive member 23 is disposed on an outer surface of the metal housing 21, and resistance of the conductive member 23 is lower than that of the metal housing 21.

The electrode assembly 22 includes the first tab 221 and a second tab 222 that have opposite polarities. The electrode assembly 22 may include a positive electrode plate (not shown in the figure), a negative electrode plate (not shown in the figure), and a separator (not shown in the figure). The electrode assembly 22 may be a wound structure formed by the positive electrode plate, the separator, and the negative electrode plate through winding, or a laminated structure formed by the positive electrode plate, the separator, and the negative electrode plate through lamination. The electrode assembly 22 further includes a positive tab (not shown in the figure) and a negative tab (not shown in the figure). The positive tab may be a positive electrode current collector uncoated with a positive electrode active substance layer in the positive electrode plate, and the negative tab may be a negative electrode current collector uncoated with a negative electrode active substance layer in the negative electrode plate. The first tab 221 may be a positive tab or a negative tab. If the first tab 221 is a positive tab, the second tab 222 is a negative tab; and if the first tab 221 is a negative tab, the second tab 222 is a positive tab.

The electrode assembly 22 may be a laminated electrode assembly 22 or a wound electrode assembly 22, and the first tab 221 and the second tab 222 may be located on a same end of the electrode assembly 22 or on two ends of the electrode assembly 22 respectively. As shown in FIG. 3, the electrode assembly 22 is a wound electrode assembly 22, and the first tab 221 and the second tab 222 are located on two ends of the electrode assembly 22 respectively along an axial direction of the electrode assembly 22.

The metal housing 21 has an opening 212, the electrode assembly 22 is accommodated in the housing, and the metal housing 21 may have a variety of shapes, for example, cylinder or cuboid. The shape of the metal housing 21 may be determined based on a specific shape of the electrode assembly 22. For example, if the electrode assembly 22 is a cylindrical structure, the metal housing 21 may be a cylindrical structure; and if the electrode assembly 22 is a cuboid structure, the metal housing 21 may be a cuboid structure. For example, FIG. 3 shows the case of the metal housing 21 and the electrode assembly 22 being cylindrical.

The metal housing 21 may be made of a variety of metal materials, for example, copper, iron, aluminum, stainless steel, aluminum alloy, or SPCC (steel plate cold commercial), and the conductive member 23 may also be made of a variety of metal materials, for example, copper, iron, aluminum, stainless steel, or aluminum alloy, provided that resistance of the conductive member 23 is lower than that of the metal housing 21. For example, the conductive member 23 is made of aluminum, and the metal housing 21 is made of steel. A wall thickness of the metal housing 21 may be 0.5 mm.

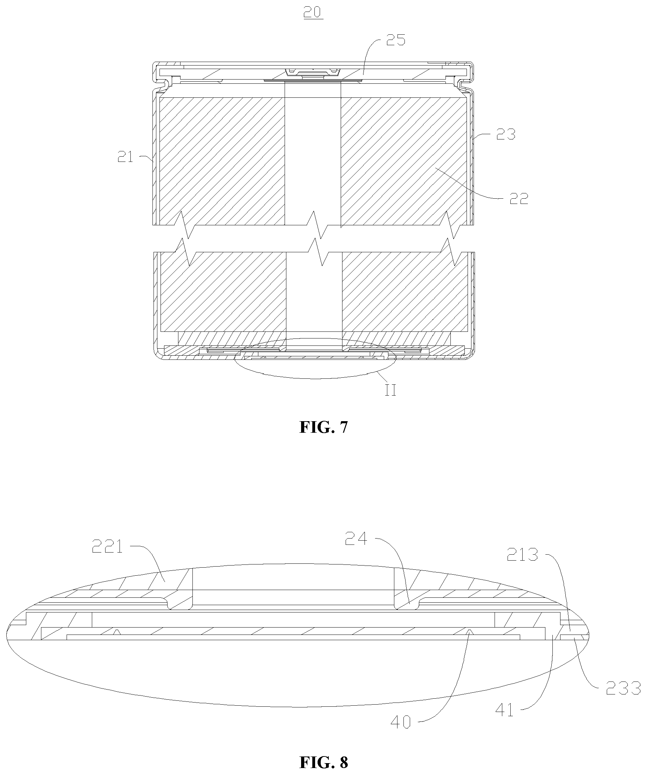

In some embodiments, the battery cell 20 further includes a first adapter 24 (shown in FIG. 8), where the first adapter 24 is located in the accommodating cavity 211, and the first adapter 24 is connected between the first tab 221 and the metal housing 21 so as to implement electrical connection between the first tab 221 and the metal steel housing. The first adapter 24 may be connected to the first tab 221 by welding, and the first adapter 24 may be connected to the metal housing 21 by welding.

The conductive member 23 having a lower resistance than the metal housing 21 is disposed on the outer surface of the metal housing 21, and the first tab 221 is electrically connected to the metal housing 21. In the charging and discharging process, current passes through the conductive member 23 or passes through both the conductive member 23 and the metal housing 21, in whichever cases, the resistance in the charging and discharging process of the battery cell 20 is lower than that in the case of current passing through the metal housing 21 only. This can reduce electric energy consumed by the battery cell 20 itself in the electric energy output process and improve power performance during electric energy input to the battery cell 20.

Referring to FIG. 5, FIG. 5 is a partial cross-sectional view of a battery cell 20 according to some embodiments of this application. In some embodiments, the metal housing 21 includes an end wall 213 and a side wall 214, where the end wall 213 is configured to be connected to the first tab 221; the side wall 214 surrounds an edge of the end wall 213, and the side wall 214 and the end wall 213 jointly define an accommodating cavity 211; and the conductive member 23 is connected to the end wall 213, and a first conductive part 231 is formed on an end of the side wall 214 farther away from the end wall 213, the first conductive part 231 being configured to output electric energy of the battery cell 20.

The side wall 214 is a sleeve structure, and the side wall 214 surrounds the periphery of an electrode assembly 22. The end wall 213 is located on an end of the side wall 214 along an axial direction of the side wall 214, and the side wall 214 surrounds the edge of the end wall 213. The side wall 214 and the end wall 213 may be an integrated structure formed by welding, sealed connection, or the like; or the side wall 214 and the end wall 213 may be an integrally formed structure formed by integral forming.

A side of the end wall 213 facing toward the electrode assembly 22 is directly electrically connected to the first tab 221, or a side of the end wall 213 facing toward the electrode assembly 22 is indirectly electrically connected to the first tab 221 through a first adapter 24. The conductive member 23 is connected to a side of the end wall 213 facing away from the electrode assembly 22 to implement electrical connection between the conductive member 23 and the end wall 213, so as to implement electrical connection between the conductive member 23 and the metal housing. The conductive member 23 may be electrically connected to the end wall 213 by welding or the like. The conductive member 23 extends from a joint of the conductive member 23 and the end wall 213 to the end of the side wall 214 farther away from the end wall 213 along an outer surface of the metal housing 21, and the first conductive part 231 of the conductive member 23 is formed on the end of the side wall 214 farther away from the end wall 213, the first conductive part 231 being configured to output electric energy of the battery cell 20 or input electric energy to the battery cell 20.

It should be noted that the first conductive part 231 being configured to output electric energy of the battery cell 20 means that the first conductive part 231 is configured to be directly connected to other components (for example, a busbar or an electric device) so as to output electric energy of the battery cell 20. The first conductive part 231 being configured to input electric energy to the battery cell 20 means that the first conductive part 231 is configured to be directly connected to a charging device (not shown in the figure) so that the charging device charges the battery cell 20.

In other embodiments, the first tab 221 may alternatively be electrically connected to other portions of the metal housing 21. For example, the first tab 221 is electrically connected to the side wall 214, and along an axial direction of the battery cell 20, a joint of the first tab 221 and the side wall 214 is distanced from the first conductive part 231.

The conductive member 23 on the outer surface of the metal housing 21 extends from one end of the metal housing 21 to the other end, and resistance of the conductive member 23 is lower than that of the metal housing 21. In the charging and discharging process, current passes through the conductive member 23 or passes through both the conductive member 23 and the metal housing 21, in whichever cases, the resistance in the charging and discharging process of the battery cell 20 is lower than that in the case of current passing through the metal housing 21 only. This can reduce electric energy consumed by the battery cell 20 itself in the electric energy output process and improve power performance during electric energy input to the battery cell 20.

Referring to FIG. 6, FIG. 6 is an enlarged view of position I in FIG. 5. In some embodiments, the accommodating cavity 211 has an opening 212, and the battery cell 20 further includes an end cover 25, where the end cover 25 is disposed on one end of the metal housing 21, and the end cover 25 is configured to close the opening 212; and the metal housing 21 further includes a restraint member 215, where the restraint member 215 is located on the end of the side wall 214 farther away from the end wall 213, the restraint member 215 is configured to restrict the movement of the end cover 25 along a direction leaving the electrode assembly 22, and at least part of the first conductive part 231 is located on a side of the restraint member 215 facing away from the electrode assembly 22.

The opening 212 of the accommodating cavity 211 is disposed on the end of the side wall 214 of the metal housing 21 farther away from the end wall 213, the end cover 25 is configured to cover the opening 212 to close the accommodating cavity 211, and the accommodating cavity 211 is further configured to accommodate an electrolyte, for example, a liquid electrolyte. The end cover 25 and the end wall 213 are respectively located on two ends of the side wall 214 along an axial direction of the side wall 214, the end cover 25 is provided with an electrode terminal 251 (shown in FIG. 4 and FIG. 5), and the electrode terminal 251 on the end cover 25 is configured to be electrically connected to a second tab 222. In some embodiments, the battery cell 20 further includes a second adapter 26 (shown in FIG. 4 and FIG. 5), the second adapter 26 is connected between the first tab 221 and the electrode terminal 251 so that the second tab 222 is electrically connected to the electrode terminal 251 through the second adapter 26, the second adapter 26 may be connected to the second tab 222 by welding, and the second adapter 26 may be connected to the electrode terminal 251 on the end cover 25 by welding. To reduce the risk of short circuit inside the battery cell 20, the battery cell 20 further includes an insulative sealing member 27 configured to separate the end cover 25 from the metal housing to prevent the electrode terminal 251 on the end cover 25 from being electrically connected to the second tab 222 and prevent the metal housing 21 from being electrically connected to the first tab 221 where such electrical connections will cause short circuit of the battery cell 20. The insulative sealing member 27 may be further configured to separate the second tab 222 from the metal housing 21 to prevent the second tab 222 from overlapping with the metal housing 21.

The first conductive part 231 may be completely located on the side of the restraint member 215 facing away from the electrode assembly 22. Alternatively, the first conductive part 231 may be partially located on the side of the restraint member 215 facing away from the electrode assembly 22, and partially located on the periphery of the side wall 214.

The restraint member 215 is an annular structure located on the end of the side wall 214 farther away from the end wall 213, and the restraint member 215 is connected to the side wall 214. The side wall 214 surrounds an outer edge of the restraint member 215, and an inner edge of the restraint member 215 defines the opening 212 of the accommodating cavity 211. In an embodiment that the end cover 25 covers the opening 212, along the axial direction of the battery cell 20, the restraint member 215 is located on a side of the end cover 25 facing away from the electrode assembly 22, so as to restrict the movement of the end cover 25 along the direction leaving the electrode assembly 22.

The restraint member 215 can restrict the position of the end cover 25 so that the battery cell 20 has a more stable structure. In addition, an output part is disposed on a side of the restraint member 215 facing away from the end wall 213 to facilitate connection between the output part and its structural member (for example, a busbar, an electric device, or a charging device) for outputting or inputting electric energy.

As shown in FIG. 6, in some embodiments, the battery cell 20 further includes a first insulator 28, where the first insulator 28 is configured to separate the first conductive part 231 from the restraint member 215.

The first insulator 28 is disposed between the first conductive part 231 and the restraint member 215 to implement insulated connection between the first conductive part 231 and the restraint member 215. The first insulator 28 may be an insulating rubber, an insulating adhesive layer, or the like. If the first insulator 28 is an insulating material with bonding performance, the first insulator 28 can implement insulation between the first conductive part 231 and the restraint member 215, and can also connect the first conductive part 231 to the restraint member 215. The first insulator 28 may be formed between the first conductive part 231 and the restraint member 215 by bonding or coating. A thickness of the first insulator 28 may be 0.05 mm.

In other embodiments, the first conductive part 231 may be electrically connected to the restraint member 215, so that current can pass through both the conductive member 23 and the metal housing 21, that is, current can pass through two circuits of the metal housing 21 and the conductive member 23 in parallel. In the charging and discharging process of the battery cell 20, current passes through both the conductive member 23 and the metal housing 21. The metal housing 21 and the conductive member 23 are connected in parallel, so that intemal resistance of the battery cell 20 is lower than resistance of the metal housing 21 or the conductive member 23, thereby reducing electric energy consumed by the battery cell 20 itself in the electric energy output process and improving power performance during electric energy input to the battery cell 20.

The first insulator 28 separates the first conductive part 231 from the restraint member 215 to reduce the probability of current passing through the metal housing 21, so that current is output only through the conductive member 23 as much as possible, thereby reducing electric energy consumed by the battery cell 20 itself in the electric energy output process and improving power performance during electric energy input to the battery cell 20.

As shown in FIG. 6, in some embodiments, the conductive member 23 includes a second conductive part 232, where the second conductive part 232 is disposed on an outer surface of the side wall 214 and is electrically connected to the first conductive part 231; and the battery cell 20 further includes a second insulator 29, where the second insulator 29 is configured to separate the second conductive part 232 from the side wall 214.

The second insulator 29 is disposed between the second conductive part 232 and the outer surface of the side wall 214 to implement insulated connection between the second conductive part 232 and the side wall 214. The second insulator 29 may be an insulating rubber, an insulating adhesive layer, or the like. If the second insulator 29 is an insulating material with bonding performance, the second insulator 29 can implement insulation between the second conductive part 232 and the side wall 214, and can also connect the second conductive part 232 to the side wall 214. The second insulator 29 may be formed between the second conductive part 232 and the side wall 214 by bonding or coating. A thickness of the second insulator 29 may be set to 0.05 mm.

In an embodiment that the first insulator 28 separates the first conductive part 231 from the restraint member 215, the second insulator 29 and the first insulator 28 allow the conductive member 23 to be electrically connected to the end wall 213 of the metal housing 21 only. In the charging and discharging process of the battery cell 20, current passes through the conductive member 23 only, and resistance of the conductive member 23 is lower than that of the metal housing, so that internal resistance of the battery cell 20 is small, thereby reducing electric energy consumed by the battery cell 20 itself in the electric energy output process and improving power performance during electric energy input to the battery cell 20. The first insulator 28 and the second insulator 29 may be an integrally formed structure.

In some embodiments, the battery cell 20 includes only the first insulator 28, and the second conductive part 232 is electrically connected to the outer surface of the side wall 214, so that current can pass through both the conductive member 23 and the metal housing 21 so as to output electric energy of the battery cell 20 or input electric energy to the battery cell 20.

The second insulator 29 separates the second conductive part 232 from the side wall 214 to reduce the probability of current passing through a steel housing, so that current is output only through the conductive member 23 as much as possible, thereby reducing electric energy consumed by the battery cell 20 itself in the electric energy output process and improving power performance during electric energy input to the battery cell 20.

Referring to FIG. 7 and FIG. 8, FIG. 7 is a cross-sectional view of a battery cell according to some other embodiments of this application, and FIG. 8 is an enlarged view of position II in FIG. 7 In some embodiments, a battery cell 20 further includes a pressure relief mechanism 40, where the pressure relief mechanism 40 is disposed on an end wall 213, and the pressure relief mechanism 40 is configured to be actuated when intemal pressure or temperature of the battery cell 20 reaches a threshold, so as to relieve the internal pressure of the battery cell 20.

The pressure relief mechanism 40 is a component or part that is actuated when the internal pressure or temperature of the battery cell 20 reaches a predetermined threshold, so as to relieve the intemal pressure or temperature. Design of the threshold varies with different design requirements. The threshold may depend on the material used for one or more of a positive electrode plate, a negative electrode plate, an electrolyte, and a separator in the battery cell 20. The pressure relief mechanism 40 may be in a form of an explosion-proof valve, a gas valve, a pressure relief valve, a safety valve, or the like, and may specifically employ an element or part sensitive to pressure or temperature, such that when the intemal pressure or temperature of the battery cell 20 reaches the predetermined threshold, the pressure relief mechanism 40 performs an action or a weak structure provided in the pressure relief mechanism 40 is destroyed, thereby forming the opening 212 or a channel for relieving the internal pressure or temperature.

"Actuate" mentioned in this application means that the pressure relief mechanism 40 is put into action or is activated to a given state such that the internal pressure and temperature of the battery cell 20 are relieved. The action that the pressure relief mechanism 40 is put into may include but is not limited to, for example, cracking, breaking, tearing, or opening at least part of the pressure relief mechanism 40. When the pressure relief mechanism 40 is actuated, hightemperature and high-pressure substances inside the battery cell 20 are discharged as emissions from an actuated site. In this way, the battery cell 20 can relieve pressure and temperature under controllable pressure or temperature, thereby avoiding more serious potential incidents.

Referring to FIG. 8, in some embodiments, the battery cell 20 further includes the pressure relief mechanism 40, where the pressure relief mechanism 40 is disposed on the end wall 213, and the pressure relief mechanism 40 is configured to be actuated when intemal pressure or temperature of the battery cell 20 reaches a threshold, so as to relieve the intemal pressure of the battery cell 20; the conductive member 23 includes a third conductive part 233 connected to the end wall 213, where the third conductive part 233 is electrically connected to the first conductive part 231; and the end wall 213 is provided with a partition 41, where the partition 41 is configured to separate the third conductive part 233 from the pressure relief mechanism 40.

In some embodiments, the pressure relief mechanism 40 is a weak portion formed by thinning a region of the end wall 213, and a wall thickness of the weak portion is less than that of any other position of the end wall 213. In some other embodiments, an indentation may alternatively be provided on the end wall 213 so that a weak portion is formed at the indentation in the end wall 213, and a cross section of the indentation may be V-shaped, U-shaped, or the like. Alternatively, the pressure relief mechanism 40 may be formed by thinning some regions of the end wall 213 and disposing an indentation on the thinned regions.

The conductive member 23 may be disposed avoiding the pressure relief mechanism 40, so as to reduce the probability of a joint position of the end wall 213 and the conductive member 23 coming into contact with electrolyte, thereby reducing the risk of electrolyte leakage from the metal housing 21 caused by electrochemical corrosion generated when the joint position of the end wall 213 and the conductive member 23 reacts with the electrolyte. For example, the conductive member 23 is disposed only on the side wall 214, and the conductive member 23 is electrically connected to the first tab 221 through the end wall 213.

The partition 41 separates the third conductive part 233 from the pressure relief mechanism 40 so that the partition 41 can reduce the probability of a joint position of the end wall 213 and the conductive member 23 coming into contact with electrolyte, thereby reducing the risk of electrolyte leakage from the metal housing 21 caused by electrochemical corrosion generated when the joint position of the end wall 213 and the conductive member 23 reacts with the electrolyte.

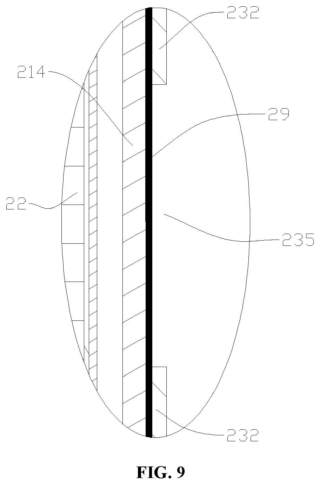

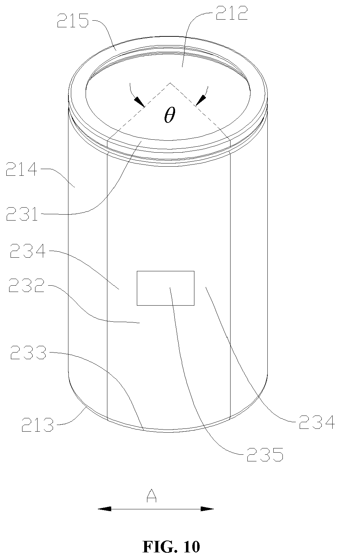

Referring to FIG. 9 and FIG. 10, FIG. 9 is an enlarged view of position III in FIG. 5, and FIG. 10 is a schematic structural diagram of a conductive member 23 disposed on an outer wall of a metal housing 21 according to some embodiments of this application. In some embodiments, the conductive member 23 includes a fusing part 234, where one end of the fusing part 234 is connected to the first conductive part 231, and the other end is connected to the third conductive part 233; and both the first conductive part 231 and the third conductive part 233 have a current flowing area larger than that of the fusing part 234.

A current flowing area represents a current flow capacity. Both the first conductive part 231 and the third conductive part 233 have a current flowing area larger than that of the fusing part 234, meaning that both the first conductive part 231 and the third conductive part 233 have a current flow capacity larger than that of the fusing part 234. When current passing through the conductive member 23 is beyond the current flow capacity of the fusing part 234, the fusing part 234 is fused such that the battery cell 20 cannot input or output electric energy through the conductive member 23.

In some embodiments, a shown in FIG. 9 and FIG. 10, the fusing part 234 is disposed on the second conductive part 232, and the fusing part 234 may be formed by providing a through hole 235 on the conductive member 23. After the through hole 235 is provided on the conductive member 23, the fusing part 234 is formed on each of two sides of the through hole 235. The two sides of the through hole 235 are two sides of the through hole 235 in a first direction A, where the first direction A is perpendicular to a direction from the first conductive part 231 to the third conductive part 233. There may be one or more through holes 235. In an embodiment that there are a plurality of through holes 235, the plurality of through holes 235 are arranged side by side in the first direction A. The through hole 235 may be a round hole or a polygonal hole. A size of the through hole 235 along the axial direction of the battery cell 20 may be 36 mm, and a size of the through hole 235 along a circumferential direction of the side wall 214 may be 36 mm.

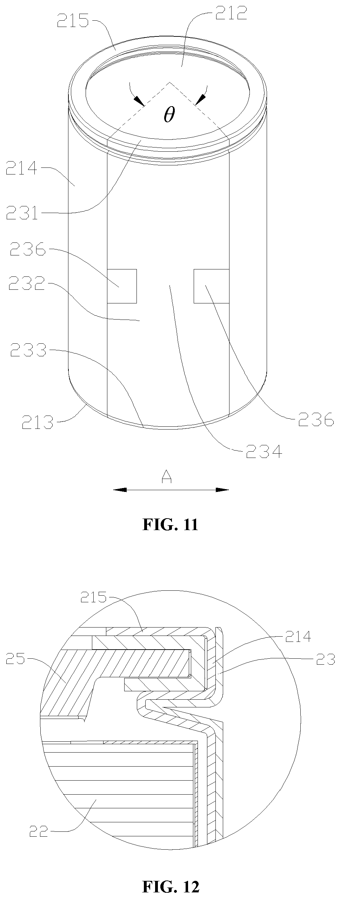

In some other embodiments, as shown in FIG. 11, the fusing part 234 may be formed by providing a notch 236 on en edge of the conductive member 23. Provision of the notch 236 makes a cross-sectional area of a part corresponding to the notch 236 smaller than a cross-sectional area of any other part of the conductive member 23, such that the fusing part 234 can be formed.

In an embodiment that the first insulator 28 separates the first conductive part 231 from the restraint member 215 and the second insulator 29 separates the side wall 214 from the second conductive part 232, in the charging and discharging process, current passes through the conductive member 23 only, and the conductive member 23 is provided with the fusing part 234. When current passing through the conductive member 23 is beyond the current flow capacity of the fusing part 234 or an external short circuit occurs, the fusing part 234 is fused to cut off a circuit, so as to protect the battery cell 20 from overheating and even thermal runaway, reducing the probability of electrical safety accidents.

In some embodiments, the conductive member 23 extends along a circumferential direction of the outer surface of the side wall 214, and a central angle θ formed thereby is greater than or equal to 90° to ensure a large enough current flowing area for the conductive member 23.

Referring to FIG. 12, FIG. 12 is a schematic diagram illustrating that a battery cell 20 is capable of outputting electric energy through a metal housing 21. In some embodiments, the metal housing 21 is configured to output electric energy of the battery cell 20. Certainly, the metal housing 21 is also configured to input electric energy to the battery cell 20.

The metal housing 21 being configured to output electric energy of the battery cell 20 means that the metal housing 21 is configured to be directly connected to other components (for example, a busbar or an electric device) so as to output electric energy of the battery cell 20. The metal housing 21 being configured to input electric energy to the battery cell 20 means that the metal housing 21 is configured to be directly connected to a charging device so that the charging device charges the battery cell 20. Current can pass through both the metal housing 21 and the conductive member 23.

In an embodiment that the metal housing 21 has the restraint member 215, the restraint member 215 may be directly connected to other components (for example, a busbar or an electric device) or a charging device.

In an embodiment that the metal housing 21 is provided with no restraint member 215, the side wall 214 may be directly connected to other components (for example, a busbar or an electric device) or a charging device.

In an embodiment that the metal housing 21 is configured to output electric energy of the battery cell 20, the conductive member 23 may include only the second conductive part 232 disposed on the outer surface of the side wall 214, and the second conductive part 232 is electrically connected to the side wall 214; or the conductive member 23 includes only the second conductive part 232 and the third conductive part 233, the third conductive part 233 is electrically connected to the end wall 213, and the second conductive part 232 is electrically connected to the side wall 214.

The conductive member 23 is disposed on the outer surface of the metal housing 21, and electric energy of the battery cell 20 is output through the metal housing 21. In this case, the metal housing 21 and the conductive member 23 are equivalent to two circuits in parallel, and resistance of the circuits in parallel is lower than that of any one of the circuits. Therefore, in the charging and discharging process, resistance of the battery cell 20 itself is lower than resistance of the metal housing 21 or the conductive member 23, thereby reducing electric energy consumed by the battery cell 20 itself in the electric energy output process and improving power performance during electric energy input to the battery cell 20.

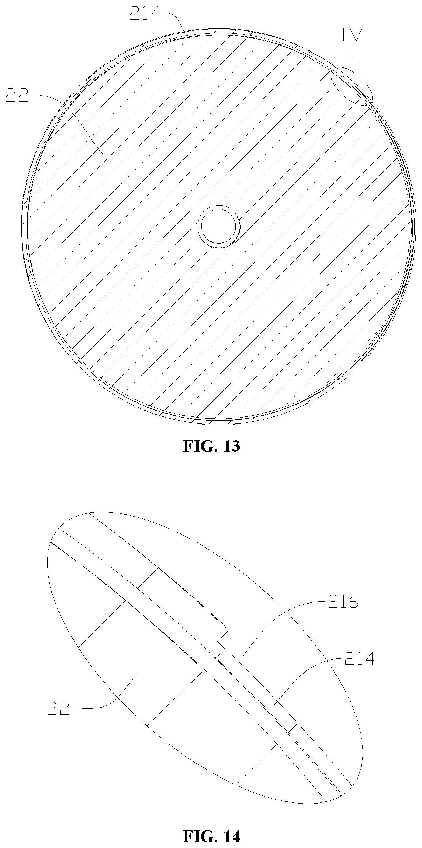

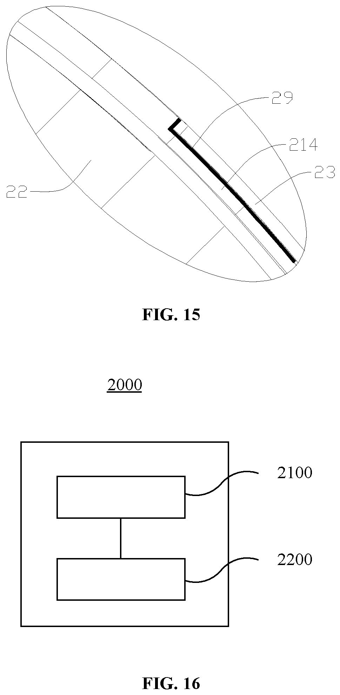

Referring to FIG. 13, FIG. 14, and FIG. 15, FIG. 13 is an axial cross-sectional view of a battery cell 20 according to some embodiments of this application, FIG. 14 is an enlarged view of a metal housing 21 at position IV in FIG. 13, and FIG. 15 is an enlarged view of position IV in FIG. 13. In some embodiments, the outer surface of the metal housing 21 is provided with a mounting groove 216, where at least part of the conductive member 23 is accommodated in the mounting groove 216.

At least part of the conductive member 23 being accommodated in the mounting groove 216 may be that the conductive member 23 is partially or completely accommodated in the mounting groove 216 along a depth direction of the mounting groove 216, where the depth direction of the mounting groove 216 is a direction toward which the mounting groove 216 is recessed, and the depth of the mounting groove 216 is a recess size of the mounting groove 216. For example, in some embodiments, a first groove (not shown in the figure) is provided on a surface of the restraint member 215 facing away from the electrode assembly 22, a second groove (not shown in the figure) is provided on the outer surface of the side wall 214, and a third groove (not shown in the figure) is provided on a surface of the end wall 213 facing away from the electrode assembly 22. The first groove, the second groove, and the third groove are in sequential communication to form the mounting groove 216. Both the first groove and the third groove are recessed along the axial direction of the battery cell 20, the first conductive part 231 is partially or completely accommodated in the first groove, and the third conductive part 233 is partially or completely accommodated in the third groove; and the second groove is recessed along a radial direction of the battery cell 20, and the second conductive part 232 is partially or completely accommodated in the second groove.

At least part of the conductive member 23 being accommodated in the mounting groove 216 may alternatively be that the conductive member 23 is partially or completely accommodated in the mounting groove 216 along an extending direction of the mounting groove 216. For example, when the mounting groove 216 is disposed only on the outer surface of the side wall 214, only the second conductive part 232 of the conductive member 23 is accommodated in the mounting groove 216. The extending direction of the mounting groove 216 is perpendicular to the depth direction of the mounting groove 216. The third conductive part 233 connected to the end wall 213 and the first conductive part 231 connected to the restraint member 215 extend out of the mounting groove 216 along the extending direction of the mounting groove 216.

In some embodiments, a mounting groove 216 of 0.25 mm is reserved on part of the outer surface of the metal housing 21 for welding the conductive member 23. The depth of the mounting groove 216 may be 0.25 mm, and a thickness of the conductive member 23 is less than or equal to 0.25 mm (for example, the thickness of the conductive member 23 is 0.2 mm). In this way, the conductive member 23 can be completely accommodated in the mounting groove 216 along the depth direction of the mounting groove 216 such that electricity is conducted through the conductive member 23 on the surface of the metal housing 21, reducing internal resistance of the battery cell 20.

At least part of the conductive member 23 is accommodated in the mounting groove 216 on the outer surface of the metal housing 21, which can reduce an external size of the battery cell 20, avoiding that the external size of the battery cell 20 is increased too much due to provision of the conductive member 23 on the battery cell 20.

In some embodiments, an outer surface of the part of the conductive member 23 accommodated in the mounting groove 216 is flush with the outer surface of the metal housing 21.

In other embodiments, the part of the conductive member 23 accommodated in the mounting groove 216 may protrude out of the mounting groove 216 along the depth direction of the mounting groove 216.

The outer surface of the part of the conductive member 23 accommodated in the mounting groove 216 is flush with the outer surface of the metal housing 21, that is, the at least part of the conductive member 23 accommodated in the mounting groove 216 is completely accommodated in the mounting groove 216, which can reduce an external size of the battery cell 20, avoiding that the external size of the battery cell 20 is increased too much due to provision of the conductive member 23 on the battery cell 20.

As shown in FIG. 4, some embodiments of this application provide a battery cell 20, where the battery cell 20 includes a metal housing 21, an electrode assembly 22, a conductive member 23, and an end cover 25. The metal housing 21 has an accommodating cavity 211, an end wall 213, a side wall 214, and a restraint member 215, where the end wall 213 and the restraint member 215 are connected to two ends of the side wall 214 along an axial direction of the side wall 214. The electrode assembly 22 is accommodated in the accommodating cavity 211, and the electrode assembly 22 has a first tab 221 and a second tab 222 located on two ends of the axial direction respectively, where the first tab 221 is a negative tab and the second tab 222 is a positive tab. The first tab 221 is electrically connected to the end wall 213 through a first adapter 24, and the second tab 222 is electrically connected to an electrode terminal 251 of the end cover 25 through a second adapter 26. The metal housing 21 may be a steel housing, and the conductive member 23 is an aluminum layer.

A surface of the metal housing 21 is provided with a mounting groove 216, and the conductive member 23 is completely accommodated in the mounting groove 216.

The conductive member 23 includes a first conductive part 231, a second conductive part 232, and a third conductive part 233 that are sequentially connected. The first conductive part 231 is disposed on a side of the restraint member 215 facing away from the electrode assembly 22, and a first insulator 28 is disposed between the first conductive part 231 and the restraint member 215 so that the first conductive part 231 is separated from the restraint member 215 through the first insulator 28. The second conductive part 232 is connected to the side wall 214, and a second insulator 29 is disposed between the second conductive part 232 and side wall 214 so that the second conductive part 232 is separated from the side wall 214 through the second insulator 29. The first insulator 28 and the second insulator 29 can also cause both the side wall 214 and the restraint member 215 to be tightly bonded to the conductive member 23. The end wall 213 is tightly bonded to the third conductive part 233 of the conductive member 23, ensuring that the end wall 213 of the metal housing 21 can be electrically connected to the first adapter 24 by penetration welding.

A positive electrode of an electric device or a charging device is connected to the electrode terminal 251, and a negative electrode of the electric device or the charging device is electrically connected to a side of the first conductive part 231 facing away from the restraint member 215, so that current does not pass through the steel housing. For example, the first tab 221 is a negative tab and the second tab 222 is a positive tab. The discharging process is: current flows through an entire loop: positive tab (second tab 222) → second adapter 26 → positive electrode (located on the electric device) → electric device → conductive member 23 → first adapter 24 → negative tab.

The conductive member 23 is provided with a hollow region (a through hole 235) on part of the second conductive part 232 (the part corresponding to the side wall 214 of the metal housing 21) to form a fusing part 234. When the battery cell 20 experiences an external short circuit or high current passes through the battery cell 20, the fusing part 234 of the conductive member 23 actively fuses to protect the battery cell 20 from overheating and even thermal runaway.

The embodiments of this application provide a battery 100, including a busbar (not shown in the figure) and the battery cell 20 according to any of the foregoing embodiments. The busbar is configured to be connected to the metal housing 21 or the conductive member 23.

In an embodiment that the battery 100 includes a plurality of battery cells 20, the busbar may be configured to connect the plurality of battery cells 20 in series and/or parallel. "A plurality of" means two or more.

The conductive member 23 having a lower resistance than the metal housing 21 is disposed on the outer surface of the metal housing 21, and the first tab 221 is electrically connected to the metal housing 21. In the charging and discharging process, current passes through the conductive member 23 or passes through both the conductive member 23 and the metal housing 21, in whichever cases, the resistance in the charging and discharging process of the battery 100 is lower than that in the case of current passing through the metal housing 21 only. This can reduce electric energy consumed by the battery 100 itself in the electric energy output process and improve power performance during electric energy input to the battery 100.

The embodiments of this application provide an electric device, including the battery cell 20 according to any of the foregoing embodiments.

Referring to FIG. 16, FIG. 16 is a schematic structural diagram of a manufacturing device 2000 of battery cell according to some embodiments of this application. The embodiments of this application provide a manufacturing device 2000 of battery cell. The manufacturing device 2000 of battery cell includes a providing apparatus 2100 and an assembly apparatus 2200. The providing apparatus 2100 is configured to provide a metal housing 21, an electrode assembly 22, and a conductive member 23. The metal housing 21 has an accommodating cavity 211, the electrode assembly 22 includes a first tab 221, and resistance of the conductive member 23 is lower than that of the metal housing 21. The assembly apparatus 2200 is configured to dispose the conductive member 23 on an outer surface of the metal housing 21, accommodate the electrode assembly 22 in the accommodating cavity 211, and electrically connect the first tab 221 to the metal housing 21.

The conductive member 23 having a lower resistance than the metal housing 21 is disposed on the outer surface of the metal housing 21, and the first tab 221 is electrically connected to the metal housing 21. In the charging and discharging process, current passes through the conductive member 23 or passes through both the conductive member 23 and the metal housing 21, in whichever cases, the resistance in the charging and discharging process of the battery 100 is lower than that in the case of current passing through the metal housing 21 only. This can reduce electric energy consumed by the battery 100 itself in the electric energy output process and improve power performance during electric energy input to the battery 100.

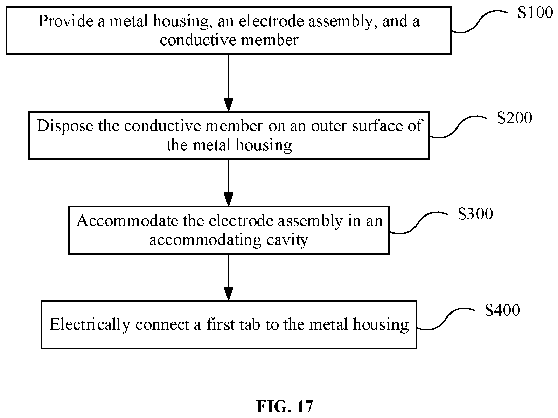

Referring to FIG. 17, FIG. 17 is a flowchart of a manufacturing method of a battery cell 20 according to some embodiments of this application. Some embodiments of this application provide a manufacturing method of the battery cell 20. The manufacturing method of the battery cell 20 includes the following steps.

Step S100. Provide a metal housing 21, an electrode assembly 22, and a conductive member 23.

The metal housing 21 has an accommodating cavity 211, the electrode assembly 22 includes a first tab 221, and resistance of the conductive member 23 is lower than that of the metal housing 21.

Step S200. Dispose the conductive member 23 on an outer surface of the metal housing 21.

Step S300. Accommodate the electrode assembly 22 in the accommodating cavity 211.

Step S400. Electrically connect the first tab 221 to the metal housing 21.

A sequence for performing step S200 and step S300 is not limited. Step S300 may be performed before step S200, or step S200 may be performed before step S300.

The conductive member 23 having a lower resistance than the metal housing 21 is disposed on the outer surface of the metal housing 21, and the first tab 221 is electrically connected to the metal housing 21. In the charging and discharging process, current passes through the conductive member 23 or passes through both the conductive member 23 and the metal housing 21, in whichever cases, the resistance in the charging and discharging process of the battery 100 is lower than that in the case of current passing through the metal housing 21 only. This can reduce electric energy consumed by the battery 100 itself in the electric energy output process and improve power performance during electric energy input to the battery 100.

## Claims

1. A battery cell (20), **characterized by** comprising:
a metal housing (21) having an accommodating cavity (211);
an electrode assembly (22) accommodated in the accommodating cavity (211), wherein the electrode assembly (22) comprises a first tab (221), and the first tab (221) is electrically connected to the metal housing (21); and
a conductive member (23) disposed on an outer surface of the metal housing (21), wherein resistance of the conductive member (23) is lower than that of the metal housing (21);
wherein the metal housing (21) comprises:
an end wall (213), configured to be connected to the first tab (221); and
a side wall (214) surrounding an edge of the end wall (213); wherein the side wall (214) and the end wall (213) jointly define the accommodating cavity (211); and
the conductive member (23) is connected to the end wall (213), and a first conductive part (231) is formed on an end of the side wall (214) farther away from the end wall (213), the first conductive part (231) being configured to output electric energy of the battery cell (20);
wherein the accommodating cavity (211) has an opening (212), and the battery cell (20) further comprises an end cover (25), wherein the end cover (25) is disposed on one end of the metal housing (21), and the end cover (25) is configured to close the opening (212); and
the metal housing (21) further comprises a restraint member (215), wherein the restraint member (215) is located on the end of the side wall (214) farther away from the end wall (213), the restraint member (215) is configured to restrict the movement of the end cover (25) along a direction leaving the electrode assembly (22), and at least part of the first conductive part (231) is located on a side of the restraint member (215) facing away from the electrode assembly (22);
, **characterized in that** the battery cell (20) further comprises a first insulator (28), wherein the first insulator (28) is configured to separate the first conductive part (231) from the restraint member (215).

2. The battery cell (20) according claim 1, **characterized in that** the conductive member (23) comprises a second conductive part (232), wherein the second conductive part (232) is disposed on an outer surface of the side wall (214) and is electrically connected to the first conductive part (231); and
the battery cell (20) further comprises a second insulator (29), wherein the second insulator (29) is configured to separate the second conductive part (232) from the side wall (214).

3. The battery cell (20) according to claim 1 or 2, **characterized in that** the battery cell (20) further comprises a pressure relief mechanism (40), wherein the pressure relief mechanism (40) actuated when internal pressure or temperature of the battery cell (20) reaches a threshold, so as to relieve the internal pressure of the battery cell (20);
the conductive member (23) comprises a third conductive part (233) connected to the end wall (213), wherein the third conductive part (233) is electrically connected to the first conductive part (231); and
the end wall (213) is provided with a partition (41), wherein the partition (41) is configured to separate the third conductive part (233) from the pressure relief mechanism (40).

4. The battery cell (20) according to claim 3, **characterized in that** the conductive member (23) comprises a fusing part (234), wherein one end of the fusing part (234) is connected to the first conductive part (231), and the other end is connected to the third conductive part (233); and
both the first conductive part (231) and the third conductive part (233) have a current flowing area larger than that of the fusing part (234).

5. The battery cell (20) according to claim 1, **characterized in that** the metal housing (21) is configured to output electric energy of the battery cell (20).

6. The battery cell (20) according to any one of claims 1 to 5, **characterized in that** the outer surface of the metal housing (21) is provided with a mounting groove (216), wherein at least part of the conductive member (23) is accommodated in the mounting groove (216).

7. The battery cell (20) according to claim 6, **characterized in that** an outer surface of the part of the conductive member (23) accommodated in the mounting groove (216) is flush with the outer surface of the metal housing (21).

8. A battery, **characterized by** comprising:
the battery cell (20) according to any one of claims 1 to 7; and
a busbar (30), configured to be connected to the metal housing (21) or the conductive member (23).

9. An electric device, **characterized by** comprising the battery cell (20) according to any one of claims 1 to 8.

10. A manufacturing method of battery cell as specified in any of claims 1-7, **characterized by** comprising:
providing (S100) a metal housing, an electrode assembly, and a conductive member, wherein
the metal housing has an accommodating cavity, the electrode assembly comprises a first tab, and resistance of the conductive member is lower than that of the metal housing;
disposing (S200) the conductive member on an outer surface of the metal housing;
accommodating (S300) the electrode assembly in the accommodating cavity; and
electrically connecting (S400) the first tab to the metal housing.

## Patentansprüche

1. Batteriezelle (20), **gekennzeichnet durch**
ein Metallgehäuse (21), das einen Aufnahmehohlraum (211) aufweist;
eine Elektrodenanordnung (22), die in den Aufnahmehohlraum (211) aufgenommen ist, wobei die Elektrodenanordnung (22) eine erste Lasche (221) umfasst und die erste Lasche (221) mit dem Metallgehäuse (21) elektrisch verbunden ist; und
ein leitendes Element (23), das auf einer Außenoberfläche des Metallgehäuses (21) angeordnet ist, wobei der Widerstand des leitenden Elements (23) kleiner als der des Metallgehäuses (21) ist;
wobei das Metallgehäuse (21) Folgendes umfasst:
eine Stirnwand (213), die konfiguriert ist, mit der ersten Lasche (221) verbunden zu sein; und
eine Seitenwand (214), die eine Kante der Stirnwand (213) umgibt; wobei die Seitenwand (214) und die Stirnwand (213) gemeinsam den Aufnahmehohlraum (211) definieren; und
das leitende Element (23) mit der Stirnwand (213) verbunden ist und ein erster leitender Abschnitt (231) bei einem Ende der Seitenwand (214), das von der Stirnwand (213) weiter entfernt ist, gebildet ist, wobei der erste leitende Abschnitt (231) konfiguriert ist, elektrische Energie der Batteriezelle (20) auszugeben;
wobei der Aufnahmehohlraum (211) eine Öffnung (212) aufweist und die Batteriezelle (20) ferner eine Stirnabdeckung (25) umfasst, wobei die Stirnabdeckung (25) an einem Ende des Metallgehäuses (21) angeordnet ist und die Stirnabdeckung (25) konfiguriert ist, die Öffnung (212) zu schließen; und
das Metallgehäuse (21) ferner ein Halteelement (215) umfasst, wobei das Halteelement (215) sich bei dem Ende der Seitenwand (214) befindet, das von der Stirnwand (213) weiter entfernt ist, das Halteelement (215) konfiguriert ist, die Bewegung der Stirnabdeckung (25) in einer Richtung, die die Elektrodenanordnung (22) verlässt, zu beschränken, und mindestens ein Abschnitt des ersten leitenden Abschnitts (231) sich auf einer Seite des Halteelements (215) befindet, die von der Elektrodenanordnung (22) abgewandt ist;
**dadurch gekennzeichnet, dass** die Batteriezelle (20) ferner einen ersten Isolator (28) umfasst, wobei der erste Isolator (28) konfiguriert ist, den ersten leitenden Abschnitt (231) vom Halteelement (215) zu trennen.

2. Batteriezelle (20) nach Anspruch 1, **dadurch gekennzeichnet, dass** das leitende Element (23) einen zweiten leitenden Abschnitt (232) umfasst, wobei der zweite leitende Abschnitt (232) auf einer Außenoberfläche der Seitenwand (214) angeordnet ist und mit dem ersten leitenden Abschnitt (231) elektrisch verbunden ist; und
die Batteriezelle (20) ferner einen zweiten Isolator (29) umfasst, wobei der zweite Isolator (29) konfiguriert ist, den zweiten leitenden Abschnitt (232) von der Seitenwand (214) zu trennen.

3. Batteriezelle (20) nach Anspruch 1 oder 2, **dadurch gekennzeichnet, dass** die Batteriezelle (20) ferner einen Druckbegrenzungsmechanismus (40) umfasst, wobei der Druckbegrenzungsmechanismus (40) auf der Stirnwand (213) angeordnet ist und der Druckbegrenzungsmechanismus (40) konfiguriert ist, ausgelöst zu werden, wenn ein Innendruck oder eine Temperatur der Batteriezelle (20) einen Schwellenwert erreicht, um den internen Druck der Batteriezelle (20) abzubauen;
wobei das leitende Element (23) einen dritten leitenden Abschnitt (233) umfasst, der mit der Stirnwand (213) verbunden ist, wobei der dritte leitende Abschnitt (233) mit dem ersten leitenden Abschnitt (231) elektrisch verbunden ist; und
die Stirnwand (213) mit einer Trennwand (41) versehen ist, wobei die Trennwand (41) konfiguriert ist, den dritten leitenden Abschnitt (233) vom Druckbegrenzungsmechanismus (40) zu trennen.

4. Batteriezelle (20) nach Anspruch 3, **dadurch gekennzeichnet, dass** das leitende Element (23) einen Fusionierungsabschnitt (234) umfasst, wobei ein Ende des Fusionierungsabschnitts (234) mit dem ersten leitenden Abschnitt (231) verbunden ist und das weitere Ende mit dem dritten leitenden Abschnitt (233) verbunden ist; und
sowohl der erste leitende Abschnitt (231) als auch der dritte leitende Abschnitt (233) einen Stromflussbereich aufweisen, der größer als der des Fusionierungsabschnitts (234) ist.

5. Batteriezelle (20) nach Anspruch 1, **dadurch gekennzeichnet, dass** das Metallgehäuse (21) konfiguriert ist, elektrische Energie der Batteriezelle (20) auszugeben.

6. Batteriezelle (20) nach einem der Ansprüche 1 bis 5, **dadurch gekennzeichnet, dass** die Außenoberfläche des Metallgehäuses (21) mit einer Befestigungsnut (216) versehen ist, wobei mindestens ein Abschnitt des leitenden Elements (23) in die Befestigungsnut (216) aufgenommen ist.

7. Batteriezelle (20) nach Anspruch 6, **dadurch gekennzeichnet, dass** eine Außenoberfläche des Abschnitts des leitenden Elements (23), der in die Befestigungsnut (216) aufgenommen ist, mit der Außenoberfläche des Metallgehäuses (21) bündig ist.

8. Batterie, **gekennzeichnet durch**
die Batteriezelle (20) nach einem der Ansprüche 1 bis 7 und
eine Sammelschiene (30), die konfiguriert ist, mit dem Metallgehäuse (21) oder dem leitenden Element (23) verbunden zu sein.

9. Elektrische Vorrichtung, **gekennzeichnet durch** die Batteriezelle (20) nach einem der Ansprüche 1 bis 8.

10. Herstellungsverfahren einer Batteriezelle nach beliebigen der Ansprüche 1-7, **gekennzeichnet durch**
Bereitstellen (S100) eines Metallgehäuses, einer Elektrodenanordnung und eines leitenden Elements, wobei
das Metallgehäuse einen Aufnahmehohlraum aufweist, die Elektrodenanordnung eine erste Lasche umfasst und der Widerstand des leitenden Elements kleiner als der des Metallgehäuses ist;
Anordnen (S200) des leitenden Elements auf einer Außenoberfläche des Metallgehäuses;
Aufnehmen (S300) der Elektrodenanordnung in den Aufnahmehohlraum und elektrisches Verbinden (S400) der ersten Lasche mit dem Metallgehäuse.

## Revendications

1. Cellule (20) de batterie, **caractérisée en ce qu'**elle comprend :
un boîtier métallique (21) présentant une cavité de logement (211) ;
un assemblage d'électrodes (22) logé dans la cavité de logement (211), l'assemblage d'électrodes (22) comprenant une première languette (221), et la première languette (221) étant électriquement connectée au boîtier métallique (21) ; et
un élément conducteur (23) disposé sur une surface extérieure du boîtier métallique (21), la résistance de l'élément conducteur (23) étant inférieure à celle du boîtier métallique (21) ;
le boîtier métallique (21) comprenant :
une paroi d'extrémité (213), configurée pour être connectée à la première languette (221) ; et
une paroi latérale (214) entourant un bord de la paroi d'extrémité (213), la paroi latérale (214) et la paroi d'extrémité (213) définissant conjointement la cavité de logement (211) ; et
l'élément conducteur (23) étant connecté à la paroi d'extrémité (213), et une première partie conductrice (231) étant formée sur une extrémité de la paroi latérale (214) la plus éloignée de la paroi d'extrémité (213), la première partie conductrice (231) étant configurée pour délivrer de l'énergie électrique de la cellule (20) de batterie ;
la cavité de logement (211) présentant une ouverture (212), et la cellule (20) de batterie comprenant en outre un couvercle d'extrémité (25), le couvercle d'extrémité (25) étant disposé sur une extrémité du boîtier métallique (21), et le couvercle d'extrémité (25) étant configuré pour fermer l'ouverture (212) ; et
le boîtier métallique (21) comprenant en outre un élément de retenue (215), l'élément de retenue (215) étant situé sur l'extrémité de la paroi latérale (214) la plus éloignée de la paroi d'extrémité (213), l'élément de retenue (215) étant configuré pour restreindre le mouvement du couvercle d'extrémité (25) selon une direction s'éloignant de l'assemblage d'électrodes (22), et au moins une partie de la première partie conductrice (231) étant située sur un côté de l'élément de retenue (215) tourné à l'opposé de l'assemblage d'électrodes (22) ;
la cellule (20) de batterie étant **caractérisée en ce qu'**elle comprend en outre un premier isolateur (28), le premier isolateur (28) étant configuré pour séparer la première partie conductrice (231) de l'élément de retenue (215).

2. Cellule (20) de batterie selon la revendication 1, **caractérisée en ce que** l'élément conducteur (23) comprend une deuxième partie conductrice (232), la deuxième partie conductrice (232) étant disposée sur une surface extérieure de la paroi latérale (214) et étant électriquement connectée à la première partie conductrice (231) ; et
la cellule (20) de batterie comprend en outre un deuxième isolateur (29), le deuxième isolateur (29) étant configuré pour séparer la deuxième partie conductrice (232) de la paroi latérale (214).

3. Cellule (20) de batterie selon la revendication 1 ou 2, la cellule (20) de batterie étant **caractérisée en ce qu'**elle comprend en outre un mécanisme de détente de pression (40), le mécanisme de détente de pression (40) étant disposé sur la paroi d'extrémité (213), et le mécanisme de détente de pression (40) étant configuré pour être actionné lorsque la pression ou température interne de la cellule (20) de batterie atteint un seuil, de manière à détendre la pression interne de la cellule (20) de batterie ;
l'élément conducteur (23) comprend une troisième partie conductrice (233) connectée à la paroi d'extrémité (213), la troisième partie conductrice (233) étant électriquement connectée à la première partie conductrice (231) ; et
la paroi d'extrémité (213) est pourvue d'une cloison (41), la cloison (41) étant configurée pour séparer la troisième partie conductrice (233) du mécanisme de détente de pression (40).

4. Cellule (20) de batterie selon la revendication 3, **caractérisée en ce que** l'élément conducteur (23) comprend une partie fusible (234), une extrémité de la partie fusible (234) étant connectée à la première partie conductrice (231), et l'autre extrémité étant connectée à la troisième partie conductrice (233) ; et
la première partie conductrice (231) et la troisième partie conductrice (233) présentent toutes deux une section de passage de courant plus grande que celle de la partie fusible (234).

5. Cellule (20) de batterie selon la revendication 1, **caractérisée en ce que** le boîtier métallique (21) est configuré pour délivrer de l'énergie électrique de la cellule (20) de batterie.

6. Cellule (20) de batterie selon l'une quelconque des revendications 1 à 5, **caractérisée en ce que** la surface extérieure du boîtier métallique (21) est pourvue d'une rainure de montage (216), au moins une partie de l'élément conducteur (23) étant logée dans la rainure de montage (216).

7. Cellule (20) de batterie selon la revendication 6, **caractérisée en ce qu'**une surface extérieure de la partie de l'élément conducteur (23) logée dans la rainure de montage (216) est affleurante avec la surface extérieure du boîtier métallique (21).

8. Batterie, **caractérisée en ce qu'**elle comprend :
la cellule (20) de batterie selon l'une quelconque des revendications 1 à 7 ; et
une barre omnibus (30), configurée pour être connectée au boîtier métallique (21) ou à l'élément conducteur (23).

9. Dispositif électrique, **caractérisé en ce qu'**il comprend la cellule (20) de batterie selon l'une quelconque des revendications 1 à 8.

10. Procédé de fabrication d'une cellule de batterie telle que définie dans l'une quelconque des revendications 1 à 7, **caractérisé en ce qu'**il comprend :
la fourniture (S100) d'un boîtier métallique, d'un assemblage d'électrodes, et d'un élément conducteur,
le boîtier métallique présentant une cavité de logement, l'assemblage d'électrodes comprenant une première languette, et la résistance de l'élément conducteur étant inférieure à celle du boîtier métallique ;
la disposition (S200) de l'élément conducteur sur une surface extérieure du boîtier métallique ;
le logement (S300) de l'assemblage d'électrodes dans la cavité de logement ; et
la connexion électrique (S400) de la première languette au boîtier métallique.
